# EUROPÄISCHE PATENTANMELDUNG

(11) **EP 0 644 135 A1**
(43) Veröffentlichungstag der Anmeldung: **22.03.1995**
(21) Anmeldenummer: 94114672.2
(22) Anmeldetag: 17.09.1994
(51) Int. Cl.: B65G 47/84, B65G 47/71

(54) **Transportstrecke für Flaschen, Dosen oder dergl. Behälter**

(30) Priorität: 21.09.1993 DE 4331957
(71) Anmelder: KHS Maschinen- und Anlagenbau Aktiengesellschaft, D-47057 Duisburg (DE)
(72) Erfinder: Weissenfels, Christoph, D-55546 Neu-Bamberg (DE); Lönnig, Manfred, D-55543 Bad Kreuznach (DE); Scherer, Heinz-Jürgen, D-55452 Windesheim (DE); Börger, Ralf, D-44137 Dortmund (DE)

(57) **Zusammenfassung**

Eine Transportstrecke für Flaschen, Dosen oder dgl. Behälter besitzt einen mehrspurigen Förderbereich (4), dem die Behälter (3) auf einer Spur (7) zugeführt werden und der die Behälter in einer Förderrichtung (A) weiterbewegt, mehrere an wenigstens einem Hilfstransporteur (11) vorgesehenen Überschubelementen (9), die in einem Arbeitshub durch den Hilfstransporteur in Förderrichtung bewegbar und individuell gesteuert für wenigstens einen Querhub (Q) oder Hubbewegung quer zur Förderrichtung (A) bewegbar sind, um Behälter gesteuert von einer Spur (7) auf eine andere Spur quer zur Förderrichtung (A) zu verschieben, an den Überschubelementen (9) vorgesehene Mitnehmern und mit Steuerkurven für die Mitnehmer zur Erzeugung der jeweiligen Hubbewegung, sowie wenigstens eine, mindestens einen Elektromagneten aufweisende Aktiviereinrichtung, die für den Eingriff eines Mitnehmers in die der gewünschten Hubbewegung entsprechende Steuerkurve aktivierbar ist. Die Besonderheit besteht darin, daß jeder Mitnehmer durch die Aktivierungeinrichtung aus einer nicht aktivierten Stellung in eine aktivierte Stellung bewegbar ist.

## Beschreibung

Die Erfindung bezieht sich auf eine Transportstrecke für Flaschen, Dosen oder dgl. Behälter gemäß Oberbegriff Patentanspruch 1.

Die erfindungsgemäße Transportstrecke ist beispielsweise eine Vorrichtung zum Sortieren von Behältern oder zum Verteilen von Behältern auf mehrere an einem Transporteur gebildete Gassen.

Bekannt ist eine als Sortiervorrichtung, d. h. als Durchlaufsortierer ausgebildete Transportstrecke (DE-OS 29 41 576), bei der seitlich von einem von mehreren Sortierbändern gebildeten Förderbereich ein Hilfstransporteur vorgesehen ist, der an einem endlosen und umlaufend angetriebenen Transportmittel eine Vielzahl von in Umlaufrichtung des Transportmittels aufeinanderfolgenden Überschubelementen besitzt. Diese sind mit einem Stößel in einer Stößelführung am Transportmittel senkrecht zur Umlaufrichtung des Transportmittels sowie senkrecht zur Förderrichtung der Transportstrecke bewegbar, und zwar jeweils die Überschubmittel an der oberen Länge der Transportmittel gesteuert derart, daß jedes Überschubelement entsprechend einer individuellen Ansteuerung entweder in einer Ausgangsstellung verbleibt, um so einen dem Überschubelement benachbarten Behälter auf dem dem Hilfstransporteur benachbarten Sortierband zu belassen, oder aus der Ausgangsstellung eine Hubbewegung (Querhub) quer zur Förderrichtung ausführt, um hierdurch den dem Überschubelement benachbarten Behälter auf ein benachbartes Sortierband überzuschieben. Die Hubbewegung der Überschubelemente ist bei der bekannten Transportstrecke durch zwei Steuerkurven gesteuert, in die an den Stößeln der Überschubelemente vorgesehene Mitnehmer ständig eingreifen, wenn sich die Stößel an der oberen Länge des Transportmittels befinden. Eine der Steuerkurven ist dabei für das Verbleiben der Überschubelemente in der Ausgangsstellung geradlinig ausgebildet. Die andere Steuerkurve weist für die Hubbewegung eine gekrümmte Formgebung auf und zweigt mit ihrem in Förderrichtung vorderen Ende von der ersten Steuerkurve an einem Übergangsbereich ab und mündet mit ihrem in Förderrichtung hinteren Ende wieder in die erste Steuerkurve ein. Am Übergangsbereich ist ein Hubmagnet mit einem Steuerstößel vorgesehen, der beim Aktivieren des Hubmagneten gegen einen diesen Steuerstößel passierenden Stößel eines Überschubelementes zur Anlage kommt und dadurch den Mitnehmer dieses Überschubelementes aus der ersten in die zweite Steuerkurve leitet.

Nachteilig ist bei dieser bekannten Transportstrecke, daß von dem Hubmagneten eine erhebliche Kraft aufgebracht werden muß, um den Mitnehmer eine Überschubelementes aus der ersten Steuerkurve in die zweite Steuerkurve zu leiten, und zwar allein bedingt schon durch die hohe Masse des jeweiligen Überschubelementes einschließlich des zugehörigen Stößels, durch die zusätzliche Masse eines evtl. gegen das Überschubelement bereits anliegenden Behälters, sowie auch bedingt durch Reibungskräfte usw. Durch die von dem Hubmagneten zu bewegenden hohen Massen ist die bekannte Transportstrecke in der maximal möglichen Fördergeschwindigkeit und damit in ihrer Leistung stark eingeschränkt.

Aufgabe der Erfindung ist es, eine Transportstrecke aufzuzeigen, die trotz einer magnetischen Steuerung bzw. Aktivierung der Mitnehmer für unterschiedliche Querhübe oder Hubbewegungen der Überschubelemente eine hohe Leistung bzw. Fördergeschwindigkeit ermöglicht.

Zur Lösung dieser Aufgabe ist eine Transportstrecke entsprechend dem kennzeichnenden Teil des Patentanspruches 1 ausgebildet.

Bei der erfindungsgemäßen Transportstrecke sind die Mitnehmer zwischen einer nicht aktivierten Stellung und einer aktivierten Stellung relativ zu einem diese Mitnehmer aufweisenden Teil (z.B. Stößel) des Überschubelementes bewegbar und der wenigstens eine Elektromagnet wirkt direkt auf die zumindest in einem Teilbereich aus magnetischem bzw. ferromagnetischen Material bestehenden Mitnehmer ein. Die Mitnehmer können mit relativ geringer Masse hergestellt werden, so daß auch für das Überführen der Mitnehmer aus der nichtaktivierten Stellung in die aktivierte Stellung oder umgekehrt nur relativ kleine Massen bewegt werden müssen und daher auch für eine schnelle Bewegung der Mitnehmer, die bei hohen Leistungen der Transportstrecke notwendig ist, nur eine relativ kleine Kraft für den wenigstens einen Elektromagneten erforderlich ist.

Magnetische oder ferromagnetische Materialien im Sinne der Erfindung sind solche, auf die ein Magnetfeld eine Kraft ausübt. Weiterbildungen der Erfindung sind Gegenstand der Unteransprüche.

Die Erfindung eignet sich bevorzugt als Sortiervorrichtung, aber auch als Verteilvorrichtung oder als Vorrichtung zum Umwandeln eines schmalen Behälterstroms in einen breiten Behälterstrom.

Die Erfindung wird im folgenden anhand der Figuren an Ausführungsbeispielen näher erläutert. Es zeigen:
- Fig. 1: in sehr vereinfachter schematischer Darstellung eine als Sortiervorrichtung ausgebildete Transportstrecke gemäß der Erfindung;

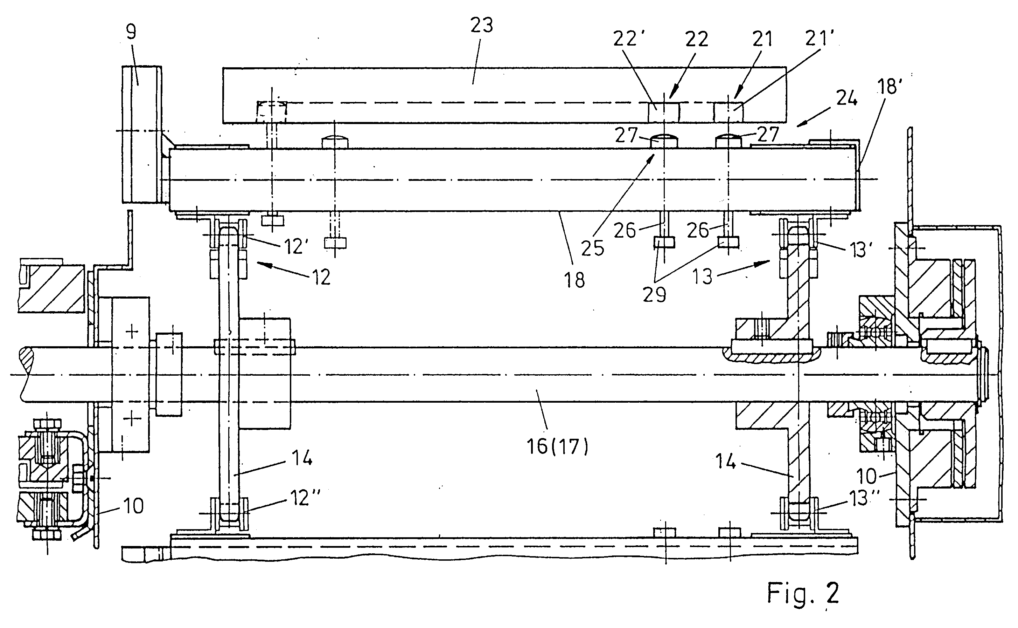

- Fig. 2: einen Schnitt entsprechend der Linie I-I der Fig. 1 bei einer ersten, möglichen Ausführungsform der Transportstrecke;
- Fig. 3: in vergrößerter Teildarstellung einen der am Hilfstransporteur vorgesehenen Stößel, zusammen mit der Aktivierungseinrichtung für die Mitnehmer bzw. deren Bolzen bei der Ausführung nach Fig. 2;
- Fig. 4: in vereinfachter Darstellung und in Seitenansicht den Hilfstransporteur der Vorrichtung nach Fig. 2;
- Fig. 5: in ähnlicher Darstellung wie Fig. 2 den Hilfstransporteur bei einer weiteren, möglichen Ausführungsform der Erfindung;
- Fig. 6: in einer Darstellung wie Fig. 4 den Hilfstransporteur gemäß Fig. 5 in Seitenansicht;
- Fig. 7: einen Querschnitt durch den Stößel eines Überschubelementes.

In den Figuren sind 1 bzw. 1a eine Transportstrecke, die bei den wiedergegebenen Ausführungsformen als Sortiervorrichtung ausgebildet ist und der über einen Zuförderer 2 Flaschen 3 unterschiedlicher Flaschenart (hinsichtlich Form, Größe, Durchmesser, Material usw.) zugeführt werden, und zwar in Richtung des Pfeiles A einem Förderbereich 4 der Transportstrecke 1 bzw. 1a, der von mehreren, senkrecht zur Förderrichtung A aneinander anschließenden Sortierbändern gebildet ist. Bei der dargestellten Ausführungsform sind insgesamt drei Sortierbänder 5-7 vorgesehen, die jeweils von einem endlos umlaufenden Transportband, nämlich von einer Scharnierbandkette gebildet sind. Auf den Förder- bzw. Sortierbereich 4 in Förderrichtung A folgend bilden die Sortierbänder 5-7 jeweils durch Geländer 8 seitlich begrenzte Gassen, über die die Flaschen 3 nach Flaschenart sortiert abgeführt werden. Die Sortierbänder 5-7 bewegen sich mit ihren oberen Längen jeweils in Förderrichtung A.

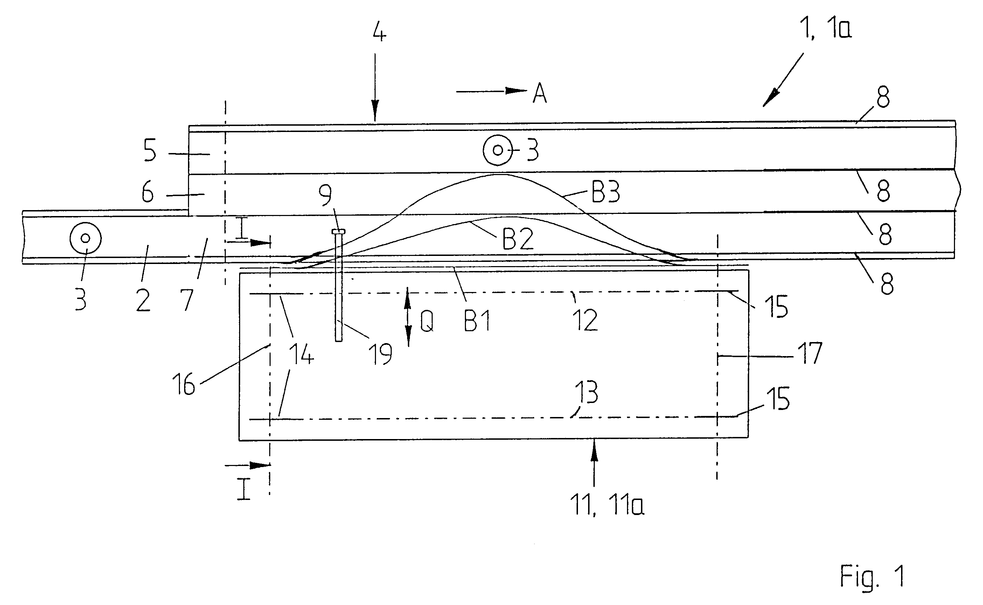

Bei der dargestellten Ausführungsform schließt sich eines der beiden äußeren Sortierbänder, nämlich bei der für die Fig. 1 gewählten Darstellung das dortige untere Sortierband 7 an den Zuförderer 2 an, d.h. sämtliche Flaschen 3 gelangen zunächst auf das Sortierband 7. Abhängig von der Flaschenart wird dann die betreffende Flasche 3 entweder auf dem Sortierband 7 belassen oder mittels eines oder mehrerer aktivierter Überschubelemente 9 der jeweiligen Flaschenart entsprechend auf das Sortierband 6 oder das Sortierband 5 übergeschoben, so daß in jeder von einem Sortierband 5 - 7 gebildeten Gassen nur die der jeweiligen Gasse zugeordneten Flaschen 3 befinden.

Die Überschubelemente 9 sind an einem Hilfstransporteur 11 bzw. 11a vorgesehen, der seitlich an der Sortierstrecke 4 angeordnet ist. Mit diesem Hilfstransporteur werden die Überschubelemente 9 in einem Arbeitshub in Förderrichtung A und mit gleicher Fördergeschwindigkeit wie die Sortierbänder 5-7 bewegt, und zwar auf einer in sich geschlossenen Bahn, deren obere Länge den Arbeitshub und deren untere Länge zusammen mit den Umlenkungen von der oberen zur unteren Länge den Rückhub bilden und auf der die Überschubelemente 9 so vorgesehen sind, daß sie zumindest während des Arbeitshubes unmittelbar aneinander anschließen.

Durch eine am Hilfstransporteur vorgesehene Steuereinrichtung sind die Überschubelemente 9 jeweils individuell so steuerbar, daß sie sich während des Arbeitshubes auf einer von drei möglichen Bewegungsbahnen B1 - B3 bewegen, und zwar in Abhängigkeit von der für die jeweilige Flasche 2 erforderlichen Sortierung. Die Bewegungsbahn B1 verläuft bei der dargestellten Ausführungsform geradlinig derart, daß das betreffende Überschubelement 9 auf dieser Bahn B1 außerhalb des Sortierbereichs 4 an der in der Fig. 1 unteren Seite des Sortierbandes 7, d. h. in einer Ausgangsstellung verbleibt und nur in Förderrichtung A bewegt wird. Auf der Bahn B2 führt das betreffende Überschubelement 9 zusätzlich zur Begegung in Förderrichtung A eine kurze Hubbewegung bzw. einen kurzen Querhub (Pfeil Q) senkrecht zur Förderrichtung A aus, und zwar derart, daß die an diesem Überschubelement 9 anliegende Flasche 3 auf das Sortierband 6 geschoben wird. Auf der Bewegungsbahn B3 führt das betreffende Überschubelement einen größeren Querhub Q derart aus, daß die betreffende Flasche 3 auf das Sortierband 5 geschoben wird.

Jedes Überschubelement 9 ist individuell für eine Bewegung auf eine der Bahnen B1-B3 während des Arbeitshubes steuerbar.

Es versteht sich, daß die Bahnen und dabei insbesondere die Bewegungsbahnen B2 und B3 auch einen von der Fig. 1 abweichenden Verlauf aufweisen können.

Der Hilfstransporteur 11 besitzt als Transportmittel zwei Ketten 12 und 13, die jeweils in einer vertikalen Ebene parallel zur Förderrichtung A eine geschlossene Schlaufe bilden und von denen die Kette 12 dem Sortierbereich 4 benachbart und die Kette 13 in größerer Entfernung von diesem Sortierbereich angeordnet ist. Die Ketten 12 und 13 sind jeweils über zwei Kettenräder 14 und 15 geführt, von denen die das vordere Ende des Hilfstransporteurs 11 bildenden Kettenräder 14 für die beiden Ketten auf einer gemeinsamen Welle 16 und die am rückwärtigen Ende des Hilfstransporteurs 11 vorgesehenen Kettenräder 15 auf einer gemeinsamen Welle 17 angeordnet sind. Beide Wellen 16 und 17 sind mit ihrer Achse horizontal und senkrecht zur Förderrichtung A liegend an einem Maschinengestell 10 des Hilfstransporteur 11 drehbar gelagert. Die Welle 17 ist synchron mit dem Antrieb der Sortierbänder 5-7 angetrieben, d.h. antriebsmäßig mit dem Antrieb der Sortierbänder verbunden, so daß sich die jeweils obere Länge 12' bzw. 13' der Ketten mit gleicher Geschwindigkeit wie die Sortierbänder 5-7 und in Förderrichtung A und die jeweils unteren Längen 12'' und 13'' entgegen der Förderrichtung A bewegen.

An den Ketten 12 und 13 sind eine Vielzahl von Stößelführungen 18 befestigt, die in Umlaufrichtung der Ketten 12 und 13 dicht aufeinander folgen und jeweils beidendig an einem Kettenglied der Kette 12 bzw. der Kette 13 gehalten sind. In jeder Stößelführung 18 ist ein Stößel 19 entsprechend der Hubbewegung Q in der horizontalen Achsrichtung senkrecht zur Förderrichtung A verschiebbar geführt. Jeder Stößel 19 trägt an seinem dem Sortierbereich 4 zugewandten Ende einen Permanentmagneten 20, der mit einer aus ferromagnetischem Material hergestellten Wandung 18' der Stößelführung 18 zusammenwirkt und die jeweiligen Stößel 19 bei fehlender Aktivierung in einer Ausgangsstellung hält, in der sich dann das betreffende Überschubelement 9 auf der Bewegungsbahn B1 bewegt.

Für die vorgeschriebene Bewegung der Überschubelemente 9 weist der Hilfstransporteur 11 bei der dargestellten Ausführungsform zwei Steuerkurven 21 und 22 auf, die jeweils in einer horizontalen Ebene angeordnet sind und von jeweils einer Nut 21' bzw. 22' gebildet sind, die an der Unterseite einer mit ihren Oberflächenseiten den horizontalen Ebenen angeordneten Platte 23 vorgesehen sind. Die Platte 23 befindet sich oberhalb der oberen Längen 12' und 13' sowie auch oberhalb der dortigen Stößelführungen 18. Die Nuten 21' und 22' sind von der Unterseite der Platte 23 her zugänglich.

Die Steuerkurven 21 und 22 sind an der Platte 23 in horizontaler Richtung gegeneinander versetzt, d.h. die Steuerkurve 21 besitzt beispielsweise einen größeren Abstand vom Sortierbereich 4 als die Steuerkurve 22. Der Verlauf der Steuerkurve 21 entspricht der Bewegungsbahn B2 und der Verlauf der Steuerkurve 22 der Bewegungsbahn B3.

Jeder Steuerkurve 21 und 22 ist an jedem Stößel 19 ein eigener Mitnehmer 24 bzw. 25 zugeordnet, der jeweils aus einem Bolzen 26 mit verdicktem, kopfartigem Gleitstück 27 zum Eingriff in die Steuerkurve 21 bzw. 22 besteht. Jeder Bolzen 26, der aus eine ferromagnetischen Material hergestellt ist, ist in einer Bohrung 28 des betreffenden Stößels 19 angeordnet und zwar axial verschiebbar derart, daß dann, wenn sich der betreffende Stößel 19 im Bereich der oberen Längen 12' und 13' befindet, die Mitnehmer 24 und 25 also der Unterseite der Platte 23 bzw. den dortigen Steuerkurven 21 und 22 benachbart sind, der jweilige Bolzen 26 mit seiner Achse in vertikaler Richtung orientiert ist. Die Gleitstücke 27 befinden sich an der bezogen auf die Bewegungsbahn der Stößel 19 außenliegnde Seite, d.h. bei im Bereich der oberen Längen 12' und 13' befindlichen Stößeln 19 oberhalb dieser Stößel bzw. der zugehörigen Stößelführungen 18.

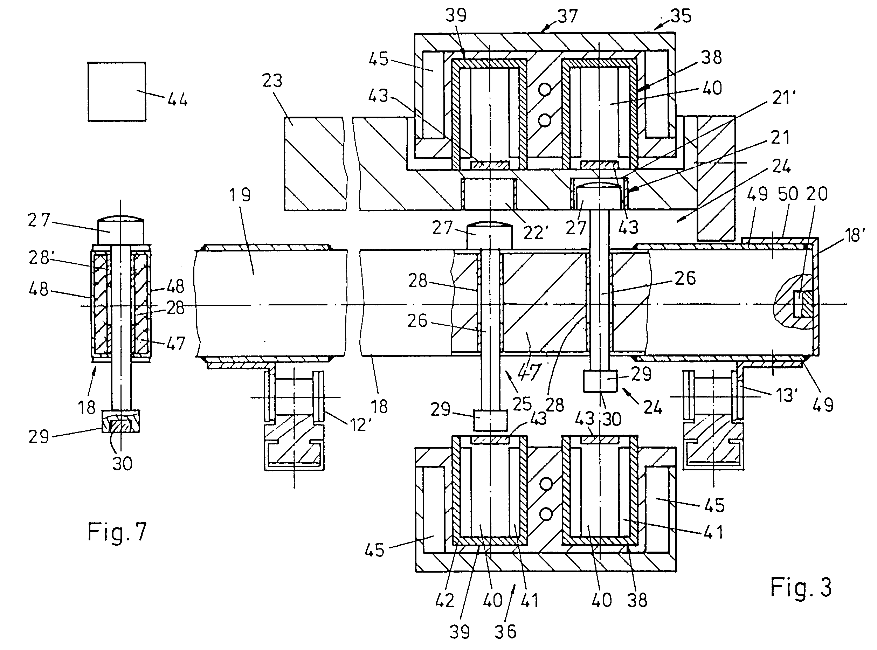

An seinem dem Gleitstück 27 abgewandten anderen Ende ist jeder Bolzen 26 mit einem abnehmbaren kreiszylinderförmigen Kopfstück 29 mit vergrößertem Durchmesser versehen. In jedem Kopfstück 29, welches an der innenliegenden Seite der Bewegungsbahn der Stößelführungen 18 bzw. der Stößel 19 vorgesehen ist, ist ein Permanentmagnet 30 derart befestigt, daß der magnetische Nordpol oder Südpol sich an der in Fig. 3 unteren Stirnseite des Kopfstückes 29 befindet. Grundsätzlich ist es auch möglich, daß das Kopfstück 29 vollständig von einem Permanentmagneten gebildet ist.

Jeder Mitnehmer 24 und 25 ist zwischen einer nichtaktivierten Stellung, in der der betreffende Mitnehmer bzw. dessen Gleitstück 27 nicht in die zugehörige Steuerkurve 21 bzw. 22 eingreift, und eine aktivierten Stellung bewegbar, in der ein solcher Eingriff des Mitnehmers in die zugehörige Steuerkurve besteht. In der Fig. 3 ist der dortige, rechte Mitnehmer 24, der der Steuerkurve 21 zugeordnet ist, in der aktivierten Stellung und der dortige linke Mitnehmer 25, der der Steuerkurve 23 zugeordnet ist, in der nichtaktivierten Stellung dargestellt. Für diese Bewegung zwischen der aktivierten und nichtaktivierten Stellung sind die Mitnehmer 24, 25 bzw. die Bolzen 26 in der vorbeschriebenen Weise axial verschiebbar.

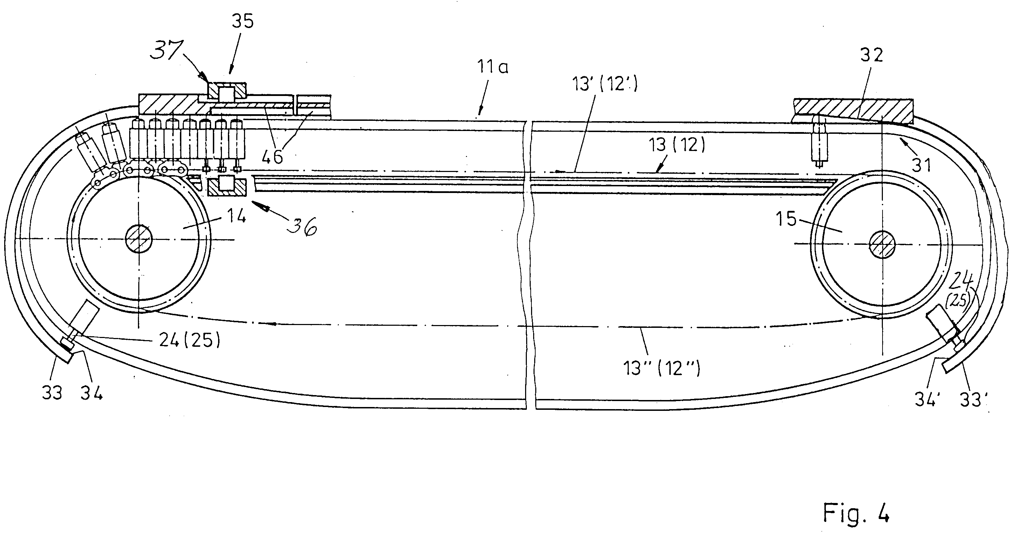

Der Hilfstransporteur 11 ist so ausgebildet, daß jeder Mitnehmer 24 bzw. 25 sich am Anfang des Arbeitshubes, d.h. an der von den Kettenrädern 14 gebildeten Umlenkung bzw. am dortigen Beginn der Steuerkurven 21 und 22 in der nichtaktivierten Stellung befindet. Um dies zu erreichen, ist bei der dargestellten Ausführungsform jede Steuerkurve 21 und 22 an ihrem Ende mit einem Rückstellbereich 31 versehen, der dadurch gebildet ist, daß dort die Tiefe der die jeweilige Steuerkurve bildenden Nut 21' bzw. 22' in Förderrichtung A zunehmend abnimmt, wie dies in der Fig. 4 mit der schrägen Bodenfläche 32 angedeutet ist, um so jeden Mitnehmer 24 bzw. 25 am Ende der Steuerkurve bzw. 22 zwangsweise in die nichtaktivierte Stellung bewegen.

Im Bereich der Kettenräder 14 ist eine die dortige Umlenkung umschließende Führung 33 vorgesehen, die eine sich der Bewegungsbahn der Gleitstücke 27 schneckenartig annäherende Führungsfläche 34 derart bildet, daß auch durch diese Führungsfläche 34 sämtliche Mitnehmer 24 und 25 beim Annähern an den Anfang der Steuerkurven 21 und 22 zwangsläufig in die nichtaktivierte Stellung bewegt werden. Eine der Führung 33 entsprechende Führung 33' mit Führungfläche 34' ist im Bereich der Kettenräder 15 bzw. an der dortigen Umlenkung vorgesehen, wobei die Führungsfläche 30' in Umlaufrichtung bzw. Bewegungsrichtung der Kettenräder 15 in einen zunehmenden Abstand von den sich vorbeibewegenden Stößel 19 aufweist.

Da die Bolzen 26 axial frei verschiebbar sind, werden diese beim Umlauf um die Welle 17 durch die hierbei auftretenden Fliehkräfte nach außen bewegt und liegen mit dem Gleitstück 27 gegen die Führungsfläche 34' an, die für ein sanftes Nachaußenbewegen der Bolzen 26 durch die Fliehkraft sorgt. Im Bereich der unteren Längen 12'' bzw. 13'' befinden sich Gleitstücke 27 dann in ihrem größtmöglichen Abstand von der jeweiligen Stößelführung 18 und die Kopfstücke 29 liegen gegen die andere Seite der Stößelführung bzw. des Stößels 19 an. Im Bereich der Führung 33 werden die Mitnehmer 24, 25 bzw. die Bolzen 26 wieder in die nichtaktivierte Stellung zurückgeführt. Durch die beschriebene Bewegung, die jeder Bolzen 26 bei einem Umlauf unabhängig von der Aktivierung eines Mitnehmers 24 bzw. 25 ausführt, ist gewährleistet, daß selbst solche Mitnehmer 24 und 25, die über eine längere Betriebsdauer zufällig nicht aktiviert wurden, leichtgängig bleiben.

Zum Aktivieren der Mitnehmer 24 bzw. 25 ist am Anfang der Steuerkurven 21 und 22, d.h. unmittelbar auf die von den Kettenrädern 14 gebildete Umlenkung folgend eine Aktivierungseinrichtung 35 angeordnet, die bei der dargestellten Ausführungsform von einer unteren und einer oberen Elektromagnetanordnung 36 bzw. 37 gebildet ist. Jede Elektromagnetanordnung weist für jede Steuerkurve 21 und 22 einen Elektromagneten auf, und zwar den Elektromagneten 38 für die Steuerkurve 21 bzw. die Mitnehmer 24 und einen Elektromagneten 39 für die Steuerkurve 22 bzw. die Mitnehmer 25.

Jeder Elektromagnet 38 und 39 besteht aus einem Kern 40 aus ferromagnetischem Material, aus einer den Kern umschließenden Spule 41 sowie aus einem die Spule 41 aufnehmenden Gehäuse 42, ebenfalls aus ferromagnetischem Material. An der Bewegungsbahn der Stößelführungen 18 zugewandten Seite (bei der Elektromagnetanordnung 36 Oberseite und bei der Elektromagnetanordnung 37 Unterseite) ist zwischen dem Kern 40 und dem Gehäuse 42 jeweils ein Magnetspalt gebildet. Dort ist der Kern 40 an der Stirnseite mit einem Permanentmagneten 43 versehen. Das andere Ende des mit seiner Achse in vertikaler Richtung angeordneten Eisenkernes 40 ist mit dem Boden des Gehäuses 42 verbunden. Die Permanentmagnete 43 der unteren Elektromagnetanordnung 36 und die Permanentmagnete 30 der Mitnehmer 24 und 25 sind so gepolt, daß die Magnetfelder dieser Magnete eine abstoßende Wirkung zwischen der unteren Elektromagnetanordnung 36 und den sich dort vorbeibewegenden Kopfstücken 29 derart haben, daß die die Elektromagnetanordnung 36 passierenden Mitnehmer 24 und 25 durch diese abstoßende Wirkung und die anziehende Wirkung der Permanentmagnete 43 der oberen Elektromagnetanordnung 35 leicht in der Schwebe gehalten werden, ohne daß es aber zu einer Überführung dieser Mitnehmer in den aktivierten Zustand kommt. Weiterhin sind die Permanentmagnete 43 so gepolt, daß sie das Magnetfeld des zugehörigen Elektromagneten 38 und 39 jeweils unterstützen.

Die beiden Elektromagneten 38 der Elektromagnetanordnungen 36 und 37 sowie auch die beiden Elektromagneten 39 der Elektromagnetanordnungen 36 und 37 sind achsgleich in einer gemeinsamen vertikalen Achse angeordnet, die auch mit der dortigen Mittelebene der jeweiligen Steuerkurve 21 bzw. 22 zusammenfällt. Die Elektromagnetanordnung 37 ist von der Oberseite her eine Vertiefung der Platte 23 eingesetzt, und zwar derart, daß zwischen dem Boden der jeweiligen Steuerkurve 21 bzw. 22 eine dünne Wandung aus dem Material der Platte verbleibt. Die Dicke dieser Wandung beträgt beispielsweise zwei Millimeter.

Die beiden Elektromagneten 38 und auch die beiden Elektromagneten 39 sind jeweils gemeinsam mit einem Gleichstrom oder einem gleichgerichteten Wechselstrom beaufschlagbar, und zwar gesteuert durch eine Steuereinrichtung 44. Soll ein bestimmtes Überschubelement 9 sich auf der Bewegungsbahn B1 bewegen, so wird keiner der Elektromagnete 38 und 39 aktiviert. Soll sich das Überschubelement 9 auf der Bewegungsbahn B2 bewegen, so werden die Elektromagnete 38 aktiviert. Durch den Elektromagneten 38 der Elektromagnetanordnung 36 und den dortigen Permanentmagneten 43 wird eine abstoßende Magnetkraft auf das Kopfstück 29 bzw. auf den dortigen Permanentmagneten 30 ausgeübt, während der Elektromagnet 38 der Elektromagnetanordnung 37 zusammen mit dem dortigen Permanentmagneten 43 eine anziehende Wirkung auf das Gleitstück 27 ausübt. Hierdurch wird der betreffende Mitnehmer 24 sehr schnell in die aktivierte Stellung übergeführt. In gleicher Weise erfolgt ein Aktivieren eines Mitnehmes 25 durch Einschalten der Elektromagnete 39. Die Steuereinrichtung 44 ist so ausgebildet, daß zu jedem Zeitpunkt wahlweise nur entweder die Elektromagneten 38 oder 39 angesteuert werden können.

Um die auftretende elektrische Verlustleistung bzw. die hierdurch bedingte Wärme abzuführen, sind die Elektromagnetanordnungen 36 und 37 mit Kanälen 45 für ein Kühlmedium versehen.

Um den jeweils aktivierten Mitnehmer 24 bzw. 25 im aktivierten Zustand zu halten, ist an der Oberseite der Platte 23 entlang jeder Steuerkurve 21 bzw. 22 eine Blockmagnetanordnung 46 vorgesehen, die beispielsweise von einer Vielzahl von Permanentmagneten oder von einem Magnetband gebildet ist und ein auf den jeweiligen Bolzen 26 einwirkendes Magnetfeld erzeugt, welches ausreichend ist, um den jeweils aktivierten Mitnehmer 24 bzw. 25 in der aktivierten Stellung zu halten, jedoch nicht ausreicht, um einen Mitnehmer aus der nichtaktivierten Stellung in die aktivierte Stellung überzuführen.

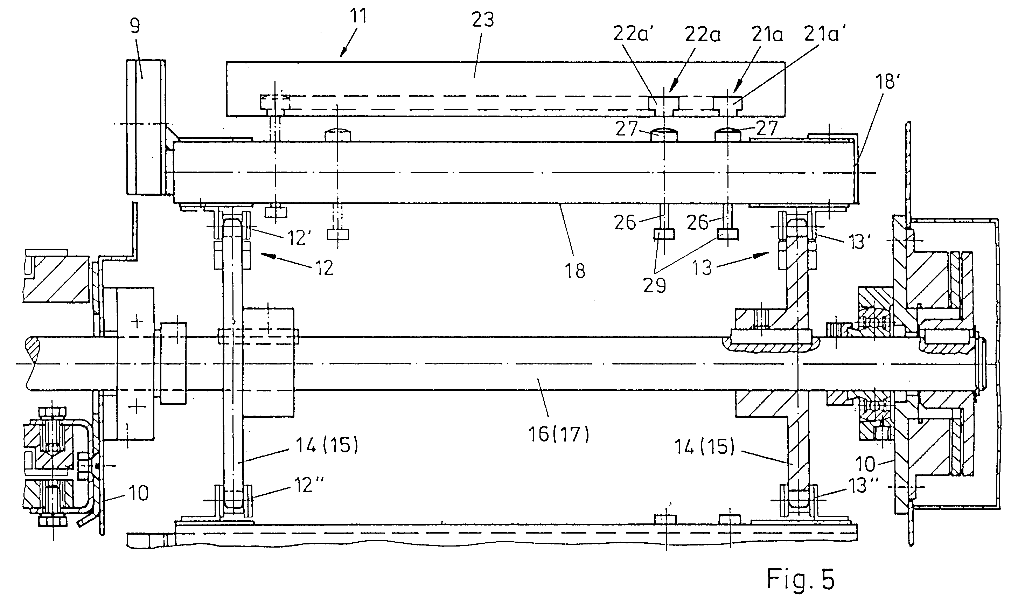

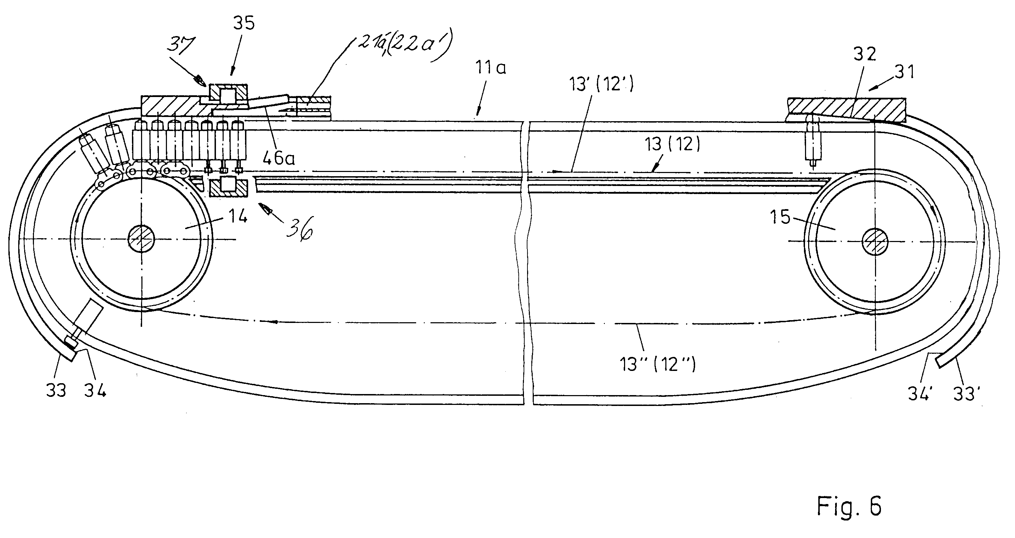

Die Figuren 5 und 6 zeigen eine Transportstrecke 1a, die sich von der Transportstrecke 1 lediglich durch einen gegenüber dem Hilfstransporteur 11 geringfügig abgeänderten Hilfstransporteur 11a unterscheidet.

Zur Vermeidung der sich über die gesamte Länge der Steuerkurven 21 und 22 erstreckenden langen Blockmagnete 46 sind bei dem Hilfstransporteur 11a Steuerkurven 21a und 22a vorgesehen, die in einem auf die Aktivierungseinrichtung 35 folgenden Bereich als T-Nuten 21a' bzw. 22a' ausgeführt sind, und zwar derart, daß nach dem Aktivieren eines Mitnehmers 24 bzw. 25 dessen Gleitstück 27 in der T-Nut formschlüssig derart geführt ist, daß die Rückkehr dieses Mitnehmers in die nichtaktivierte Stellung zumindest während des Arbeitshubes des betreffenden Überschubelementes 9 nicht möglich ist. Es versteht sich, daß die Steuerkurven 21a und 22a an ihrem Anfang und an ihrem Ende den T-förmigen Querschnitt nicht aufweisen, so daß ein Einführen und Herausgleiten der Gleitstücke 27 in bzw. aus möglich ist. Auf den Aktivierungseinrichtung 35 folgend ist eine kurze Blockmagnetanordnung 46a vorgesehen, um die Gleitstücke 27 der aktivierten Mitnehmer 24, 25 sicher in die jeweilige T-Nut 21a' bzw. 22a' zu leiten.

Wie die Figuren 3 und 7 zeigen, ist jeder Stößel 19 von einem massiven Rechteck-Vollprofil 47 oder einem entsprechenden Spritzgußteil aus Kunststoff gebildet. In diesem Profil 47 sind die Bohrungen 28 mit Gleitbuchsen 28' für die Bolzen 26 vorgesehen, und zwar derart, daß die Achsen der Bohrungen 26 senkrecht zur Längserstreckung des Stößels 19 und parallel zu den größeren Querschnittsseiten des Profils liegen. Jede Stößelführung 18 ist von zwei C-Profilen 48 gebildet, die sich in Richtung der Stößelführung erstrecken, mit ihren offenen Seiten einander zugewandt und voneinander beabstandet sind und das den jeweiligen Stößel 19 bildende Profil 47 zwischen sich aufnehmen. Die C-Profile bilden mit ihren kurzen Schenkeln jeweils eine Führung für die kürzeren Querschnittsseiten des Profils 47 und liegen mit ihrem längeren Jochabschnitt der größeren Querschnittsseite des Profils 47 benachbart.

An den beiden Enden sind die aus Metall bestehenden C-Profile 48 jeweils über Platten 49 miteinander verbunden. Auf der oberen Platte ist ein Winkelstück 50 mit einem Schenkel befestigt, welches mit seinem anderen Schenkel den Abschluß 18' gebildet.

Bei den Transportstrecken 1 und 1a ist jeweils nur an einer Seite des Förder- bzw. Sortierbereichs 4 eine die Überschubelemnte 9 aufweisender Hilfstransporteur 11 bzw. 11a vorgesehen.

Insbesondere bei Ausbildung der Transportstrecke als Sortiervorrichtung ist es aber auch möglich, an beiden Seiten jeweils einen Hilfstransporteur 11 bzw. 11a anzuordnen, wobei dann die Überschubelemente 9 derart gesteuert sind, daß jede Flasche 3 beim Überschieben zwischen wenigstens zwei Überschubelementen 9 angeordnet ist.

Die Erfindung wurde an dem Beispiel einer Sortiervorrichtung beschrieben. Sie eignet sich aber u. a. auch für eine Vorrichtung zum verteilen, bei der gefüllte gleichartige Flaschen oder Behälter auf verschiedene Gassen verteilt werden, oder auch für eine Vorrichtung zum Umwandeln eines schmalen Flaschen- oder Behälterstroms in einen breiten Flaschen- oder Behälterstrom. Bei dieser letztgenannten Vorrichtung entfallen dann die zwischen den Bändern 5 - 7 vorgesehenen Geländer 8.

### Bezugszeichenliste

- 1, 1a: Transportstrecke
- 2: Zuförderer
- 3: Flasche
- 4: Sortierbereich
- 5-7: Sortierbänder
- 8: Geländer
- 9: Überschubelement
- 10: Maschinengestell
- 11, 11a: Hilfstransporteur
- 12, 13: Ketten
- 12',13': obere Länge
- 12'', 13'': untere Länge
- 14, 15: Kettenrad
- 16, 17: Welle
- 18: Stößelführung
- 18': Abschluß
- 19: Stößel
- 20: Permanentmagnet
- 21, 21a: Steuerkurve
- 22, 22a: Steuerkurve
- 21', 22': Nut
- 21a', 22a': T-Nut
- 23: Platte
- 24, 25: Mitnehmer
- 26: Bolzen
- 27: Gleitstück
- 28: Bohrung
- 28': Gleitbuchse
- 29: Kopfstück
- 30: Permanentmagnet
- 31: Rückstellbereich
- 32: Bodenfläche
- 33, 33': Führung
- 34, 34': Führungsfläche
- 35: Aktivierungseinrichtung
- 36, 37: Elektromagnetanordnung
- 38, 39: Elektromagnet
- 40: Kern
- 41: Spule
- 42: Gehäuse
- 43: Permanentmagnet
- 44: Steuereinrichtung
- 45: Kanal
- 46, 46a: Blockmagnetanordnung
- 47: Kunststoffprofil
- 48: C-Profil
- 49: Platte
- 50: Winkelstück

## Patentansprüche

1. Transportstrecke für Flaschen, Dosen oder dgl. Behälter (3), mit einem mehrspurigen Förderbereich (4), dem die Behälter (3) auf einer Spur (7) zugeführt werden und der die Behälter (3) in einer Förderrichtung (A) weiterbewegt, mit mehreren an wenigstens einem Hilfstransporteur (11, 11a) vorgesehenen Überschubelementen (9), die in einem Arbeitshub durch den Hilfstransporteur (11, 11a) in Förderrichtung (A) bewegbar und individuell gesteuert für wenigstens einen Querhub oder Hubbewegung (Q) quer zur Förderrichtung (A) bewegbar sind, um Behälter (3) gesteuert von einer Spur (7) auf eine andere Spur quer zur Förderrichtung (A) zu verschieben, mit an den Überschubelementen (9) vorgesehenen Mitnehmern (24, 25) und mit Steuerkurven (21, 22; 21a, 22a) für die Mitnehmer zur Erzeugung der jeweiligen Hubbewegung, sowie mit wenigstens einer, mindestens einen Elektromagneten (38, 39) aufweisenden Aktiviereinrichtung (35), die für den Eingriff eines Mitnehmers (24, 25) in die der gewünschten Hubbewegung entsprechende Steuerkurve (21, 22; 21a, 22a) aktivierbar ist, dadurch gekennzeichnet, daß die Mitnehmer (24, 25) an einem Teil (19) des Überschubelementes (9) beweglich vorgesehen sind, daß jeder Mitnehmer (24, 25) durch die Aktivierungseinrichtung (35) aus einer nichtaktivierten Stellung, in der sich der jeweilige Mitnehmer außer Eingriff mit der wenigstens einen Steuerkurve (21, 21a; 22, 22a) befindet, in eine aktivierte Stellung überführbar ist, in der der jeweilige Mitnehmer (24, 25) in die wenigstens eine Steuerkurve (21, 22; 21a, 22a) eingreift, und daß der wenigstens eine Elektromagnet (38, 39) der Aktivierungseinrichtung (35) im erregten Zustand mit seinem Magnetfeld direkt auf den jeweiligen, zumindest in einem Teilbereich aus magnetischem oder ferromagnetischem Material hergestellten Mitnehmer (24, 25) einwirkt.

2. Transportstrecke nach Anspruch 1, dadurch gekennzeichnet, daß die Mitnehmer (24, 25) in einer Achsrichtung beispielsweise in vertikaler Richtung zwischen der aktivierten Stellung und der nichtaktivierten Stellung verschiebbar an dem Teil (19) des Überschubelementes (9) vorgesehen sind, und daß der wenigstens eine Elektromagnet (38, 39) im erregten Zustand ein das Verschieben des jeweiligen Mitnehmers (24, 25) in dieser Achsrichtung bewirkendes Magnetfeld erzeugt.

3. Transportstrecke nach Anspruch 2, dadurch gekennzeichnet, daß der wenigstens eine Elektromagnet (38, 39) im erregten Zustand ein den jeweiligen Mitnehmer (24, 25) an den Elektromagneten (38, 39) annäherndes Magnetfeld erzeugt.

4. Transportstrecke nach Anspruch 2 oder 3, dadurch gekennzeichnet, daß am Mitnehmer (24, 25) wenigstens ein Permanentmagnet (30) vorgesehen ist, und daß der Permanentmagnet (30) derart gepolt bzw. orientiert ist, daß bei erregtem Elektromagneten (38, 39) eine Bewegung des Mitnehmers (24, 25) vom Elektromagneten weg erfolgt.

5. Vorrichtung nach einem der Ansprüche 1 bis 4, dadurch gekennzeichnet, daß an dem wenigstens einen Elektromagneten (38, 39) oder an einem dort vorgesehenen Kern (40) wenigstens ein Permanentmagnet (43) vorgesehen ist, dessen magnetische Feldstärke so gewählt ist, daß er die Bewegung des jeweiligen Mitnehmers aus der nichtaktivierten Stellung in die aktivierte Stellung zwar unterstützt, ohne Erregung des wenigstens einen Elektromagneten (38, 39) aber diese Bewegung nicht bewirkt.

6. Transportstrecke nach Anspruch 5, dadurch gekennzeichnet, daß der Permanentmagnet (43) am Kern (40) des wenigstens einen Elektromagneten (38, 39) mit dem am Mitnehmer (24, 25) vorgesehenen Permamentmagneten (30) zusammenwirkt, und daß beide Permanentmagneten mit ihren Nordpolen oder Südpolen einander zugewandt orientiert sind, so daß ihre Magnetfelder eine abstoßende Wirkung erzeugen.

7. Transportstrecke nach Anspruch 5 oder 6, dadurch gekennzeichnet, daß die Mitnehmer (24, 25) bei Passieren der Aktivierungseinrichtung (35) in einer vertikalen Achsrichtung verschiebbar sind, und daß dort der Permanentmagnet (43) am Kern (40) des wenigstens einen Elektromagneten (38, 39) und/oder die Permanentmagneten (30) an den Mitnehmern (24, 25) eine Aufhebung der Schwerkraft der die Aktiviereinrichtung (35) passierenden Mitnehmer (24, 25) bewirkt.

8. Transportstrecke nach einem der Ansprüche 1 bis 7, dadurch gekennzeichnet, daß die wenigstens eine Steuerkurve (21, 22; 21a, 22a) oberhalb der sich vorbeibewegenden, nichtaktivierten Mitnehmer (24, 25) angeordnet ist, daß die Mitnehmer (24, 25) durch Aktivieren von unten her in die Steuerkurve (21, 22; 21a, 22a) einführbar sind, und daß oberhalb und/oder unterhalb der die Aktivierungseinrichtung (35) passierenden Mitnehmer (24, 25) wenigstens ein Elektromagnet (38, 39) angeordnet ist.

9. Transportstrecke nach Anspruch 8, dadurch gekennzeichnet, daß an der Aktivierungseinrichtung (35) wenigstens eine Gruppe von wenigstens zwei Elektromagneten (38, 39) vorgesehen ist, die (Elektromagneten), die in der Achse, in der die Mitnehmer (24, 25) zwischen der aktivierten Stellung und der nichtaktivierten Stellung bewegt werden, gegeneinander versetzt so angeordnet sind, daß diese Elektromagneten den gegenüberliegenden Seiten oder Enden der die Aktivierungseinrichtung passierenden Mitnehmer (24, 25) benachbart sind.

10. Transportstrecke nach einem der Ansprüche 1 bis 9, dadurch gekennzeichnet, daß wenigstens zwei Steuerkurven (21, 22; 21a, 22a) vorgesehen sind, daß jedes Überschubelement (9) zwei Mitnehmer (24, 25) aufweist, von denen jeder jeweils nur einer Steuerkurve (21, 22; 21a, 22a) zugeordnet ist, und daß die Aktivierungseinrichtung (35) für die Mitnehmer (24, 25) jeder Steuerkurve jeweils wenigstens einen individuell ansteuerbaren oder erregbaren Elektromagneten (38, 39) oder wenigstens eine individuell erregbare Gruppe von Elektromagneten (38, 39) aufweist.

11. Transportelement nach einem der Ansprüche 1 bis 10, dadurch gekennzeichnet, daß auf die Aktivierungseinrichtung (35) folgend an der wenigstens einen Steuerkurve (21, 22; 21a, 22a) Mittel vorgesehen sind, um die aktivierten Mitnehmer (24, 25) im aktivierten Zustand und damit in Eingriff mit der Steuerkurve (21, 22; 21a, 22a) zu halten.

12. Transportstrecke nach Anspruch 11, dadurch gekennzeichnet, daß die Mittel zum Halten der Mitnehmer im aktivierten Zustand von einer weiteren, sich entlang wenigstens eines Teils der Steuerkurve (21, 22; 21a, 22a) erstreckenden Magnetanordnung (46, 46a) gebildet sind.

13. Transportstrecke nach Anspruch 11 oder 12, dadurch gekennzeichnet, daß die Mittel dadurch gebildet sind, daß die wenigstens eine Steuerkurve (21a, 22a) zumindest auf einer Teillänge einen Querschnitt, beispielsweise einen T-förmigen Querschnitt aufweist, der wenigstens eine Hinterschneidungsfläche bildet, die von Führungs- oder Gleitstücken (27) aktivierter Mitnehmer (24, 25) hintergreifbar ist.

14. Transportstrecke nach einem der Ansprüche 1 bis 13, dadurch gekennzeichnet, daß die Mitnehmer (24, 25) von Bolzen (26) gebildet sind, die an einem Ende ein im aktivierten Zustand in die Steuerkurve (21, 22; 21a, 22a) eingreifendes Führungs- oder Gleitstück (27) aufweisen.

15. Transportstrecke nach einem der Ansprüche 1 bis 14, dadurch gekennzeichnet, daß jedes Überschubelement (9) einen Stößel (19) besitzt, der in einer Stößelführung (18) am Hilfstransporteur (11, 11a) in Querrichtung (Q) verschiebbar ist.

16. Transportstrecke nach Anspruch 15, dadurch gekennzeichnet, daß der Stößel (19) von einem Kunststoffvollprofil (47), beispielsweise von einem Rechteckvollprofil gebildet ist.

17. Transportstrecke nach Anspruch 15 oder 16, dadurch gekennzeichnet, daß die Mitnehmer (24, 25) am Stößel (19) bewegbar oder verschiebbar vorgesehen sind.

18. Transportstrecke nach einem der Ansprüche 1 - 17, dadurch gekennzeichnet, daß die Aktivierungseinrichtung am Beginn der wenigstens einen Steuerkurve (21, 22, 21a, 22a) vorgesehen ist.

19. Transportstrecke nach einem der Ansprüche 1 - 18, dadurch gekennzeichnet, daß eine Kühlung, vorzugsweise in Form eines Kühlmittelkanals (45), für den wenigstens einen Elektromagneten (38, 39) vorgesehen ist.

20. Transportstrecke nach einem der Ansprüche 1 - 19, dadurch gekennzeichnet, daß für jede Steuerkurve (21, 22; 21a, 22a) ein oberer und ein unterer Elektromagnet (38, 39) vorgesehen ist, von denen der untere Elektromagnet (38, 39) im erregten Zustand mit den Permanentmagneten (30) an den sich vorbeibewegenden Mitnehmern (24, 25) zum Anheben des jeweiligen zu aktivierenden Mitnehmers (24, 25) aus der nicht aktivierten Stellung in die aktivierte Stellung.

21. Transportstrecke nach Anspruch 20, dadurch gekennzeichnet, daß der untere Elektromagnet (38, 39), bevorzugt auch der obere Elektromagnet (38, 39) an seinem Kern (40) den Permanentmagneten (43) aufweist.

22. Transportstrecke nach Anspruch 1 - 21, dadurch gekennzeichnet, daß diese eine Sortiervorrichtung oder eine Verteilvorrichtung oder eine Vorrichtung zum Umwandeln eines schmalen einspurigen Behälterstroms in einen breiten Behälterstrom oder ein Teil einer der vorgenannten Vorrichtungen ist.
